# EUROPÄISCHE PATENTSCHRIFT

(11) **EP 1 125 670 B1**
(45) Veröffentlichungstag und Bekanntmachung des Hinweises auf die Patenterteilung: **15.12.2004**
(21) Anmeldenummer: 00110097.3
(22) Anmeldetag: 13.05.2000
(51) Int. Cl.: B23K 9/32, B23Q 3/155, B23D 79/02, B29C 37/04

(54) **Verputzvorrichtung, insbesondere Schweissraupenputzmaschine**
Cleaning device, in particular welding bead cleaning machine
Dispositif à ébarber, en particulier pour des cordons de soudure

(30) Priorität: 19.02.2000 DE 20003048 U
(43) Veröffentlichungstag der Anmeldung: 22.08.2001
(73) Patentinhaber: Maschinenbau Horn GmbH, 46240 Bottrop (DE)
(72) Erfinder: Horn, Andreas c/o Maschinenbau Horn GmbH, 46240 Bottrop (DE)
(74) Vertreter: Nunnenkamp, Jörg, Dr.

(56) Entgegenhaltungen:
- AT-B- 354 074
- DE-A- 4 006 318
- DE-A- 4 118 259
- DE-A- 4 237 939
- DE-C- 19 753 102
- US-A- 4 587 698

## Beschreibung

Die Erfindung betrifft eine Verputzvorrichtung, insbesondere Schweißraupenputzmaschine, zum Bearbeiten von vorzugsweise Eckverbindungen an aus Profilstücken zusammengesetzten, insbesondere zusammengeschweißten, Rahmen, regelmäßig Fenster- oder Türrahmen aus Kunststoff oder Aluminium, mit mehreren Bearbeitungswerkzeugen, die in einem oder zwei Magazin-Werkzeugträger(n) aufgenommen werden, wobei der jeweilige Magazin-Werkzeugträger wenigstens eine Stelleinrichtung zur wahlweisen Überführung des Bearbeitungswerkzeuges von einer Ausgangsstellung in eine Bearbeitungsposition und zurück aufweist, ferner mit wenigstens einem Gestell zur Aufnahme des jeweiligen Bearbeitungswerkzeuges inklusive Magazin-Werkzeugträger sowie zugehöriger Stelleinrichtung, und mit einem Halter zur Aufnahme des Werkzeugträgers in dem Gestell, wobei der Halter in zumindest drei Richtungen verfahrbar ist, so dass eine Sechsachsen- oder Mehrachsen-Verstellung der Bearbeitungswerkzeuge erfolgt.

Bei dem Bearbeitungswerkzeug handelt es sich insbesondere um ein Abstech- oder Abziehmesser, einen Bohrer, Fräser oder dergleichen. Grundsätzlich können die Profilstücke auch auf andere Art als eine Schweißung miteinander verbunden sein. So ist hier auch eine (Heiß-)Klebeverbindung, eine Stauchverbindung oder dergleichen denkbar.

Eine Verputzvorrichtung der beschriebenen Art wird durch die DE 83 33 479 U1 vorgestellt. Dabei finden sich drei über Spindeln durch elektromotorische Schrittmotoren auf Führungen in zwei Bewegungsachsen verfahrbare Kreuzschlitten mit jeweils mindestens einem Werkzeugträger. Dieser dient zur Aufnahme des Schweißraupen-Bearbeitungswerkzeuges. Ein oberer und ein unterer Kreuzschlitten sind jeweils auf einem weiteren, auf Führungen in einer zu den beiden Bewegungsachsen senkrechten Achse verfahrbaren Schlitten angeordnet. Allen vorgenannten Schlitten sind CNC-gesteuerte Scheibenläufermotoren mit angeflanschtem Drehwinkelgeber als Antrieb zugeordnet. Dadurch soll nach einem Stromausfall sichergestellt werden, dass die Bearbeitung problemlos zu Ende geführt werden kann und im Übrigen bei einer Änderung des Rahmenprofils ein Werkzeugwechsel nicht erforderlich ist.

Eine Verputzvorrichtung ähnlicher Art wird darüber hinaus im Rahmen der DE 42 37 939 A1 beschrieben. Das betreffende Verputzen, insbesondere Schweißraupenverputzen, wird üblicherweise im Zusammenhang mit der Herstellung von Fensterrahmen aus Profilstücken durchgeführt. Diese Profilstücke lassen sich beispielsweise in einer Vierkopf-Schweißmaschine zu einem Fensterrahmen (Flügel- oder Blendrahmen) zusammenfügen (vgl. beispielsweise DE 196 35 955 A1). Dabei werden die einzelnen Profilstücke eingespannt und unter Druck sowie bei hoher Temperatur zusammengeschweißt (vgl. DE 197 05 839 A1).

Durch diesen Verarbeitungsvorgang entstehen in der Regel an den Eckverbindungen Schweißraupen, und zwar sowohl innenseitig als auch außenseitig des zusammengefügten Rahmens. Diese Schweißraupen werden mit Hilfe der beschriebenen Verputzvorrichtungen entfernt. Dabei wird ein zugehöriges Bearbeitungswerkzeug, insbesondere Abstech- oder Abziehmesser, zumeist gegen das zu bearbeitende Profil gedrückt und spanabhebend entlang der Schweißraupe fortbewegt (vgl. EP 0 705 659 A1).

Die Rahmenbearbeitung kann dabei so erfolgen, dass ein Glattverputzen erfolgt, das heißt, dass die Schweißraupe vollständig entfernt wird und ein glatter Übergang zwischen den verbundenen Profilstücken im Eckbereich vorliegt. Regelmäßig wird jedoch eine sogenannte Schattenfuge eingebracht, um einen evtl. Höhenversatz der Profilstücke ohne Trübung des optischen Erscheinungsbildes ausgleichen zu können.

Bei der Lehre nach der DE 42 37 939 A1 ist ein Werkzeugträger zur Aufnahme der Bearbeitungswerkzeuge in der Art eines Revolverkopfes ausgeführt. Es handelt sich also um einen Revolverkopf-Werkzeugträger. Die Bearbeitungswerkzeuge sind an diesem Werkzeugträger auf einem Kreisumfang angeordnet und durch Drehen des Werkzeugträgers positionierbar. Im Einzelnen sind hierzu die Bearbeitungswerkzeuge in schräg von oben nach unten verlaufenden Führungen an dem Werkzeugträger geführt und lassen sich mittels Antriebseinrichtungen von einer zurückgezogenen Ausgangsstellung in eine Bearbeitungsposition nach radial außen verschieben.

Eine solche Vorgehensweise ist aufwendig und kann zu Präzisionseinbußen führen. Denn letztlich kommt es allein für die Vorschubbewegung des Bearbeitungswerkzeuges auf die Überlagerung von nicht weniger als drei Bewegungen an. Zum einen muss der als Revolverkopf ausgeführte Werkzeugträger gedreht werden. Zum anderen ist es noch erforderlich, dass das jeweilige Bearbeitungswerkzeug entlang der schräg verlaufenden Führungen an dem Werkzeugträger bewegt wird. Schließlich muss diese Schrägbewegung punktgenau gestoppt werden, damit im Anschluss hieran mittels des verfahrbaren Gestells die gewünschte Bearbeitung gelingt. Eine solche Verfahrensweise ist nicht nur aufwendig, sondern mit praktisch nicht beherrschbaren Ungenauigkeiten verbunden. Auch sind die Rüstzeiten bei einem Rahmenwechsel nicht unerheblich.

Ferner ist eine Vorrichtung zur Bearbeitung der Schweißraupen an Ecken eines insbesondere aus Kunststoffprofilen zusammengeschweißten Rahmens bekannt. Diese greift auf einen durch elektrisch gesteuerte Schrittmotoren in mindestens zwei sich kreuzenden Bewegungsebenen auf Führungen verfahrbaren Werkzeugschlitten zurück. Dabei kann der zugehörige Motor des Antriebs als CNC-gesteuerter Scheibenläufermotor ausgeführt sein (vgl. DE 41 18 259 A1).

Weiter wird im Stand der Technik eine Vorrichtung zum Putzen der Schweißraupen an den Außenecken eines aus Metall- oder Kunststoffprofilen zusammengeschweißten Rahmens beschrieben. Dabei erfolgt das Erkennen des Außenprofils des zu bearbeitenden Rahmens in an sich bekannter Art und Weise über Taster oder dergleichen. Diese Taster übermitteln die erfassten Rahmenwerte an eine Steuerung, über die dann veranlasst wird, dass der entsprechende Profilfräser in die Arbeitslinie gefahren wird (vgl. DE 40 06 318 A1).

Durch die DE 42 20 944 A1 ist eine Vorrichtung zum Bearbeiten von Schweißraupen bekannt geworden, welche über mindestens einen Arbeitsschlitten mit wenigstens drei Werkzeugträgern verfügt, die mit unterschiedlichen Bearbeitungswerkzeugen bestückt sind und sich gegen eine Rahmenecke bewegen lassen. Der Arbeitsschlitten ist mit Abstand parallel zur Rahmenecke gelagert, wobei auf dem Arbeitsschlitten ein axial verschiebbarer Scheibenfräser und ein drehbarer und axial verschiebbarer Werkzeugteller angeordnet sind.

Der Erfindung liegt das technische Problem zu Grunde, eine Verputzvorrichtung der eingangs beschriebenen Ausgestaltung so weiterzuentwickeln, dass eine reproduzierbare, genaue und schnelle Bewegung des Bearbeitungswerkzeuges gelingt, wobei auf mehrere Bearbeitungswerkzeuge bei geringen Rüstzeiten zurückgegriffen werden können soll.

Zur Lösung dieser Aufgabe schlägt die Erfindung bei einer gattungsgemäßen Verputzvorrichtung vor, dass der jeweilige Magazin-Werkzeugträger jeweils in einer Ebene angeordnete Aufnahmen für je ein eigenes Bearbeitungswerkzeug aufweist, wobei jede Aufnahme mit einer separat ansteuerbaren und als linear verstellbaren Zylinder-/Kolbeneinheit ausgebildeten Stelleinrichtung ausgerüstet ist und zumindest der Magazin-Werkzeugträger, der Halter und die Stelleinrichtung mittels einer Steuereinheit angesteuert werden, so dass jeder beliebige Raumpunkt unter Rückgriff auf ein vorbestimmtes und von der Steuereinheit ausgewähltes Bearbeitungswerkzeug erreicht werden kann.

In der Regel sind zwei in Bezug zu einem Bearbeitungstisch gegenüberliegende Magazin-Werkzeugträger zur oberseitigen und/oder unterseitigen Bearbeitung des Rahmens realisiert. Regelmäßig besitzt der Magazin-Werkzeugträger eine oder mehrere in einer Ebene angeordnete Aufnahmen für jeweils einen oder mehrere Werkzeugträger. Dabei kann jede Aufnahme mit einer separat ansteuerbaren Stelleinrichtung zur Auswahl und wahlweisen Beaufschlagung des zugehörigen Bearbeitungswerkzeuges ausgerüstet sein.

Im Rahmen der Erfindung kommt also primär ein gegenüber dem Gestell feststehender bzw. an diesem fixierter Magazin-Werkzeugträger für das jeweilige Bearbeitungswerkzeug zum Einsatz, der sich durch in der Regel ebenengleiche, nebeneinanderliegende Aufnahmen für die einzelnen Bearbeitungswerkzeuge auszeichnet. In Verbindung mit den zumeist separat beaufschlagbaren Stelleinrichtungen erfordert der Einsatz eines gewünschten Bearbeitungswerkzeuges folglich nur eine Linearverstellung desselben (mittels der zugehörigen Stelleinrichtung). Die richtige Position zur Schweißraupe stellt dabei (gleichzeitig oder anschließend) das mindestens in einer Ebene verfahrbare Gestell sicher. Die Erfindung verzichtet also ausdrücklich auf die wenig präzisen Dreh-/Linearverstellungen gemäß DE 42 37 939 A1.

Die gleichzeitige oder wechselseitige oberseitige und/oder unterseitige Bearbeitung des (eingespannten) Rahmens wird - wie beschrieben - dadurch realisiert, dass die beiden in Bezug auf den Bearbeitungstisch für den Rahmen sich gegenüberliegenden Magazin-Werkzeugträger vorgesehen sind. Diese können an den zwei oder mehr Gestellen fixiert sein.

Die Ansteuerung und Beaufschlagung der jeweiligen Stelleinrichtung gelingt besonders elegant für den Fall, dass es sich hier um eine linear verstellbare Zylinder-/Kolbeneinheit handelt. Denn derartige Einrichtungen können präzise, punktgenau und schnell verstellt werden und eignen sich zudem besonders zur Beaufschlagung bzw. Ansteuerung mittels Elektronikkomponenten. Selbstverständlich liegt es auch im Rahmen der Erfindung, an dieser Stelle auf eine Gewindespindel oder dergleichen Linearstelleinrichtungen zurückzugreifen.

Von besonderer Bedeutung ist die Tatsache, dass das jeweilige Bearbeitungswerkzeug inklusive Magazin-Werkzeugträger sowie zugehöriger Stelleinrichtung von dem jeweiligen Gestell der zwei oder mehr Gestelle aufgenommen wird. Das heißt, es sind auch mehr als zwei Gestelle denkbar, wenn dies die Topologie der gesamten Verputzvorrichtung zulässt.

Dabei eröffnet die Erfindung grundsätzlich die Möglichkeit, ein Bearbeitungswerkzeug (inklusive Magazin-Werkzeugträger) unter Rückgriff auf mehrere Gestelle zu verfahren. Üblicherweise ist jedoch pro Bearbeitungswerkzeug bzw. Magazin-Werkzeugträger jeweils ein eigenes Gestell vorgesehen. Auch ist es denkbar, ein Gestell - wie beschrieben - mit zwei (oder mehr) Bearbeitungswerkzeugen (inklusive Magazin-Werkzeugträgern) auszurüsten, die sich beispielsweise in Bezug auf den Bearbeitungstisch gegenüberliegen können.

Durch die beschriebene Ausrüstung einer gattungsgemäßen Verputzvorrichtung mit zwei oder mehr Gestellen, die jeweils in drei oder mehr Richtungen verfahrbar sind, wird im Besonderen eine reproduzierbare, genaue und schnelle Bewegung des Bearbeitungswerkzeuges erreicht. Dabei kann im Rahmen dieser Ausführungsform sogar auf die bekannte Dreh-/Linearverstelleinrichtung nach DE 42 37 939 C2 oder jede andere Halterung für das jeweilige Bearbeitungswerkzeug zurückgegriffen werden.

Im Allgemeinen stehen die drei vorgenannten Richtungen senkrecht aufeinander und ermöglichen Positioniervorgänge des jeweiligen Gestells in X-, Y- und/oder Z-Richtung. Auf diese Weise eröffnet die beschriebene Verputzvorrichtung praktisch eine Sechsachsen-Verstellung der Bearbeitungswerkzeuge. Selbstverständlich ist auch eine Sieben- und Mehrachsen-Verstellung denkbar, wenngleich nicht bevorzugt.

Damit eine reproduzierbare und punktgenaue Bearbeitung eines Rahmens gelingt, lässt sich ein Bearbeitungsnullpunkt mit Hilfe eines auf oder an einem Bearbeitungstisch angebrachten Anschlages zur Aufnahme des Rahmens festlegen. Dieser Anschlag ist in der Regel fixiert, kann jedoch auch verstellbar ausgeführt sein.

Im Einzelnen besitzt das jeweilige Gestell größtenteils einen in X- und/oder Y-Richtung verfahrbaren Kreuz- bzw. Koordinatentisch. Mit Hilfe dieses Kreuztisches lässt sich ein hierauf stehender Achsenbock verstellen. Dieser Achsenbock dient üblicherweise zur Bewegung des Werkzeugträgers bzw. Magazin-Werkzeugträgers in Z-Richtung.

Die Steuereinrichtung zur Beaufschlagung des Magazin-Werkzeugträgers bzw. der zugehörigen wenigstens einen Stelleinrichtung bzw. Linearstelleinrichtung und des jeweiligen Gestells bzw. der zugehörigen Antriebe ist als SPS-(speicherprogrammierbare)Steuereinheit ausgeführt.

Damit wird im Gegensatz zum Stand der Technik ein praktisch frei programmierbares schnelles und reproduzierbares Anfahren jedes beliebigen Raumpunktes unter Rückgriff auf ein vorbestimmtes Bearbeitungswerkzeug erreicht. Das gilt für jedes Bearbeitungswerkzeug, da dieses von der Steuereinheit ausgewählt und mit Hilfe der Stelleinrichtung entsprechend beaufschlagt werden kann. Folglich lassen sich selbst komplizierteste Schweißraupen einwandfrei bearbeiten.

Dabei ist von besonderer Bedeutung, dass bei Rückgriff auf ein oberseitig und ein unterseitig des Rahmens angeordnetes Gestell mit zugehörigem Bearbeitungswerkzeug und jeweilige Dreiachsen-Verstellung eine gleichsam Sechsachsen-Bearbeitung gelingt, und zwar grundsätzlich für jedes Gestell unabhängig voneinander. Dies ist bisher nicht für möglich gehalten worden.

Durch die Festlegung eines Bearbeitungsnullpunktes (beispielsweise mit Hilfe des Anschlages) wird gewährleistet, dass verschiedenste Rahmen nach ihrer Identifizierung in einer optionalen Abtasteinrichtung problemlos und vollautomatisch bearbeitet werden können. Denn es ist hierzu lediglich erforderlich, das entsprechende und in der Steuereinheit abgelegte Bearbeitungsprogramm abzurufen.

Dieses Programm lässt sich im einfachsten Fall dadurch vorgeben, dass bei einem zu bearbeitenden Rahmen die betreffende Schweißraupe mit Hilfe des Bearbeitungswerkzeuges abgefahren wird und die jeweiligen Koordinaten zur Abspeicherung gelangen. Wenn nun mit Hilfe der Abtasteinrichtung exakt ein solcher Rahmen identifiziert wird, kann das zugehörige Bearbeitungsprogramm aufgerufen werden und ermöglicht nun eine vollautomatische Bearbeitung, ohne dass manuell eingegriffen zu werden braucht.

Dies alles gelingt mit gegenüber dem Stand der Technik deutlich verringerten Rüstzeiten und mit bisher nicht da gewesener Präzision. Zudem eignet sich die beschriebene Verputzvorrichtung aufgrund ihrer Variabilität praktisch zur Glättung sämtlicher Verarbeitungsspuren, so auch zur Entfernung von beispielsweise Kleberaupen oder Aufwerfungen durch Materialstauchungen usw.. Hierin sind die wesentlichen Vorteile der Erfindung zu sehen.

Im Folgenden wird die Erfindung anhand einer lediglich ein Ausführungsbeispiel darstellenden Zeichnung näher erläutert; es zeigen:
- **Fig. 1**: eine Verputzvorrichtung, welche beispielhaft das Verständnis der Erfindung erleichtert,
- **Fig. 2**: eine Draufsicht auf den Gegenstand nach Fig. 1,
- **Fig. 3**: die erfindungsgemäße Verputzvorrichtung,
- **Fig. 4**: einen teilweisen Schnitt durch den Gegenstand nach Fig. 3 und
- **Fig. 5**: ein als Abstech- und Abziehmesser ausgeführtes Bearbeitungswerkzeug in vergrößerter Ansicht.

In den Figuren ist eine Verputzvorrichtung, nach dem Ausführungsbeispiel eine Schweißraupenputzmaschine, zum Bearbeiten von Eckverbindungen an aus Profilstücken 1 zusammengeschweißten Rahmen R dargestellt. Bei diesen Rahmen R handelt es sich um Fenster- oder Türrahmen aus beispielsweise Kunststoff oder Aluminium. Selbstverständlich können auch andere Werkstoffe zum Einsatz kommen, solange diese im Bereich von Eckverbindungen verschweißt werden, was zu Schweißraupen 2 korrespondiert, die mit Hilfe der dargestellten Schweißraupenputzmaschine bearbeitet werden. Auch ist es grundsätzlich möglich, andere Bearbeitungsspuren hiermit zu bearbeiten, so beispielsweise Aufwerfungen als Resultat von Stauchungen beim Zusammenfügen von Profilstücken 1. Jedenfalls ist der Einsatz der dargestellten Verputzvorrichtung nicht auf die Beseitigung von Schweißraupen 2 allein beschränkt.

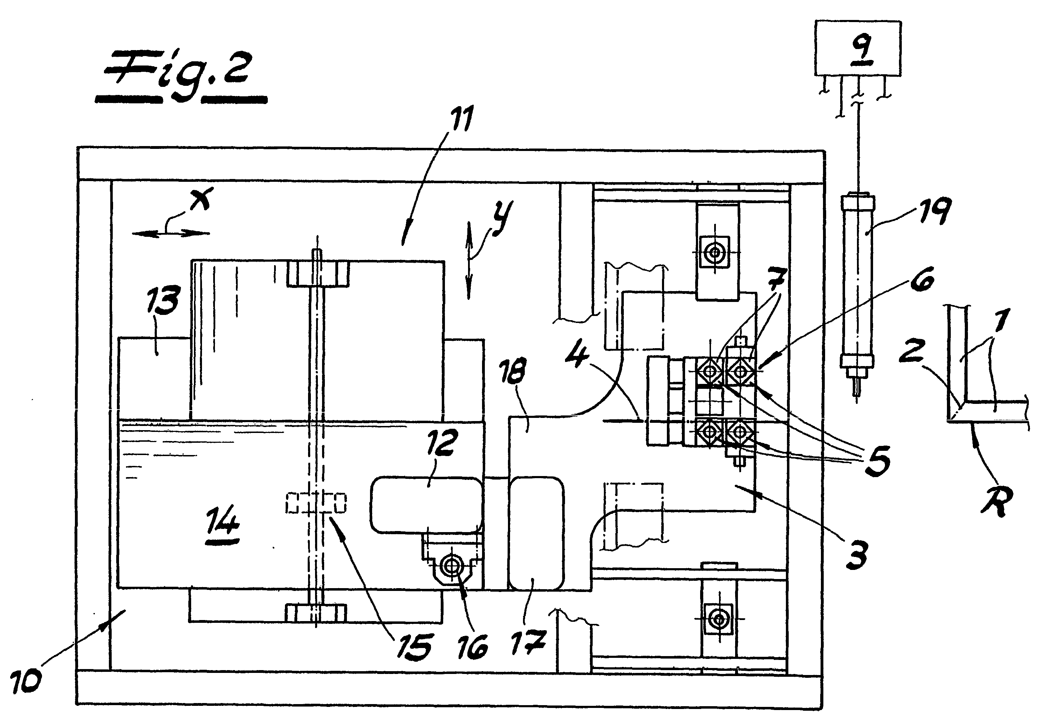

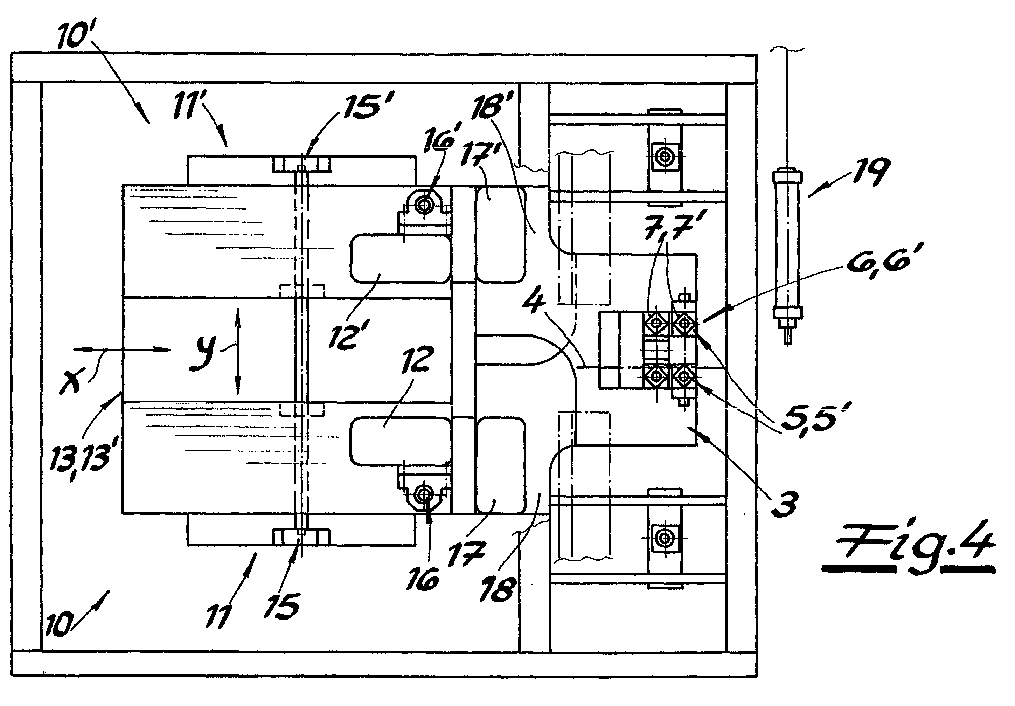

Im Einzelnen wird ein zuvor aus Profilstücken 1 zusammengefügter Rahmen R auf einem Bearbeitungstisch 3 abgelegt, vorliegend eingespannt. Zur Ausrichtung dieses Rahmens R dient ein Anschlag bzw. eine Anschlagleiste 4. Dieser Anschlag bzw. die Anschlagleiste 4 fährt frei mit Bezug zur Zeichenebene in den Fig. 2 und 4 nach unten, damit der jeweilige Rahmen R problemlos von einer Bedienperson entnommen werden kann. Sämtliche zu verarbeitende Profilstücke 1 werden an diese Anschlagleiste 4 angelegt, wobei für jeden Rahmen R bzw. jedes zu bearbeitende Profilstück 1 ein eigenes Ablaufprogramm von einer nachfolgend noch näher zu erläuternden Steuereinheit 9 zur Verfügung gestellt wird. Weitere Ausgleichsleisten, Anschläge usw. - außer der beschriebenen Anschlagleiste 4 - sind also ausdrücklich nicht erforderlich.

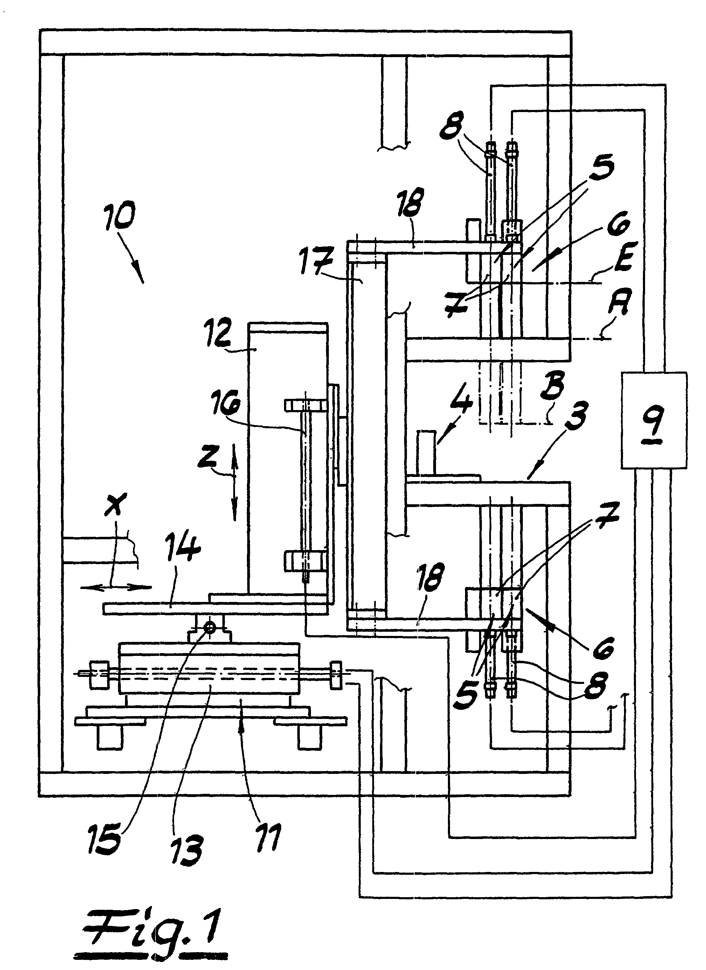

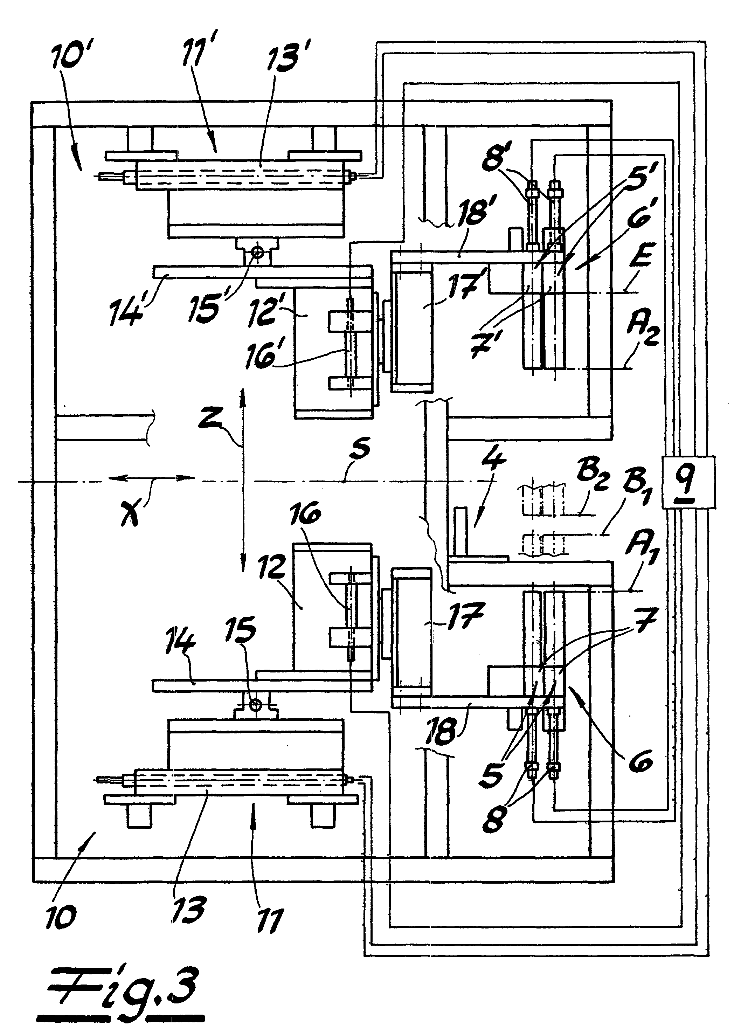

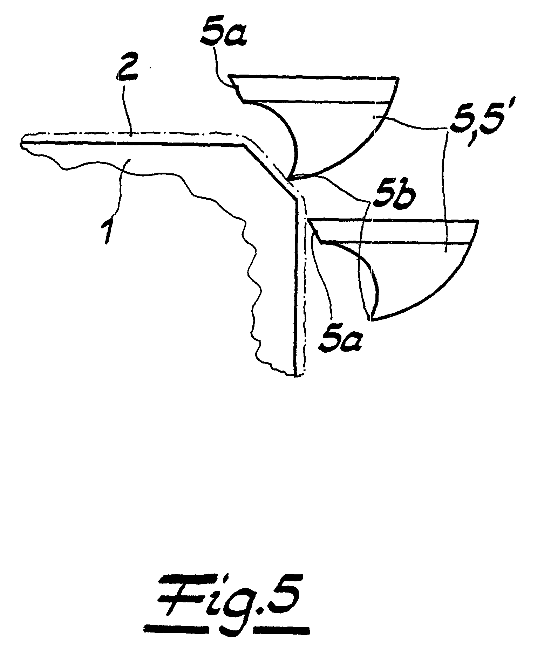

Mit Hilfe von Bearbeitungswerkzeugen 5, 5' kann nun diese Schweißraupe 2 abgetragen werden. Bei den Bearbeitungswerkzeugen 5, 5' handelt es sich nach dem Ausführungsbeispiel um ein Abstech- oder Abziehmesser 5, 5', wie es im Detail in Fig. 5 vergrößert dargestellt ist. Auch sind an dieser Stelle Bohrer, Fräser oder dergleichen denkbar. Die jeweiligen Bearbeitungswerkzeuge 5, 5' werden in einem bzw. zwei Magazin-Werkzeugträger(n) 6, 6' aufgenommen, welche(r) jeweils in einer Ebene E angeordnete Aufnahmen 7, 7' für je ein oder mehrere Werkzeugträger bzw. Magazin-Werkzeugträger 6, 6' aufweist(en) (vgl. Fig. 1 und 3).

Nach dem Ausführungsbeispiel findet sich in jeder Aufnahme 7, 7' ein eigenes Bearbeitungswerkzeug 5, 5' (vgl. Fig. 2 und 4). Zusätzlich ist jede Aufnahme 7, 7' mit einer separat ansteuerbaren Stelleinrichtung 8, 8', nach dem Ausführungsbeispiel einer linear verstellbaren Zylinder-/Kolbeneinheit 8, 8', ausgerüstet. Diese Stelleinrichtung bzw. Zylinder-/Kolbeneinheit 8, 8' dient zur Auswahl und wahlweisen Beaufschlagung des zugehörigen Bearbeitungswerkzeuges 5, 5'. Dieses kann von einer Ausgangsstellung A, A₁, A₂ in eine Bearbeitungsposition B, B₁, B₂ und zurück bewegt werden (vgl. Fig. 1 und 3).

Die Auswahl und Ansteuerung der Stelleinrichtung 8, 8' erfolgt mittels der angedeuteten Steuereinheit 9. Diese Steuereinheit 9 ist im Rahmen des Ausführungsbeispiels als speicherprogrammierbare Steuereinheit (SPS) 9 ausgeführt (vgl. Fig. 1, 2 und 3).

Anhand der Fig. 1 erkennt man, dass das jeweilige Bearbeitungswerkzeug 5 inklusive Magazin-Werkzeugträger 6, sowie zugehöriger Stelleinrichtung 8 von einem Gestell 10 aufgenommen wird. Dieses Gestell 10 setzt sich im Wesentlichen aus einem in X- und Y-Richtung verfahrbaren Kreuztisch 11 sowie einem hierauf senkrecht aufstehenden Achsenbock 12 zusammen. Der Kreuztisch 11 ist auf einer Basisplatte 13 befestigt und kann mittels ausdrücklich nicht dargestellter Antriebe in X- bzw. Y-Richtung verfahren werden.

Auf den Kreuztisch 11 ist eine Unterstützungsplatte 14 aufgeschraubt, welche den Achsenbock 12 trägt. Diese Unterstützungsplatte 14 lässt sich gegenüber dem Kreuztisch 11 in ihrer Neigung variieren, wofür ein Drehlager 15 sorgt. Hierdurch kann der Achsenbock 12 in Z-Richtung ausgerichtet werden, so dass mit Hilfe einer dortigen Verstelleinrichtung 16 ein angeschlossener Halter 17 exakt in Vertikalrichtung verfahrbar ist. Die Verstelleinrichtung 16 ist - wie die nicht ausdrücklich gezeigten Antriebe für den Kreuztisch 11 - an die Steuereinheit 9 angeschlossen.

Der Halter 17 trägt mit jeweiligen Horizontalauslegern 18 zwei Magazin-Werkzeugträger 6 mit zugehörigen Aufnahmen 7 für die Bearbeitungswerkzeuge 5. Diese Horizontalausleger 18 - und damit die Magazin-Werkzeugträger 6 und die zugehörigen Bearbeitungswerkzeuge 5 - sind in Bezug auf den Bearbeitungstisch 3 gegenüberliegend angeordnet, so dass sich ein Rahmen R oberseitig und/oder unterseitig bearbeiten lässt.

Dies gelingt noch besser und mit größerer Variabilität für den Fall, dass entsprechend der Ausgestaltung in den Fig. 3 und 4 auf zwei Gestelle 10, 10' zurückgegriffen wird. Dabei entsprechen die Bezugsziffern des unteren Gestells 10 im Großen und Ganzen der Ausgestaltung nach den Fig. 1 und 2, während demgegenüber das obere Gestell 10' mit den gleichen Details wie zuvor ausgerüstet ist. Zur Unterscheidung der beiden Gestelle 10, 10' sind die entsprechenden Bauteile mit einem Hochkomma versehen, so z. B. der obere Kreuztisch 11'. Man erkennt, dass das Gestell 10' im Wesentlichen gleich ausgebildet ist wie das Gestell 10, und zwar gespiegelt an einer Spiegelebene S (vgl. Fig. 3). Folglich ist das Gestell 10 unterhalb des Rahmens R bzw. des Bearbeitungstisches 3 angeordnet, während sich das Gestell 10' darüber erstreckt.

Auf diese Weise können die Bearbeitungswerkzeuge 5, 5' insgesamt 6-achsig (jeweils in X-, Y- und Z-Richtung pro Gestell 10, 10') verfahren werden mit Bezug zum dazwischen angeordneten Rahmen R, welcher auf dem Bearbeitungstisch 3 aufliegt. Wie die unteren Bearbeitungswerkzeuge 5 lassen sich auch die oberen Bearbeitungswerkzeuge 5' von einer Ausgangsstellung A₁ respektive A₂ in eine Bearbeitungsposition B₁ respektive B₂ und zurück bewegen (vgl. Fig. 3).

In diesem Zusammenhang sorgt die Steuereinheit 9 - wie üblich - dafür, dass die von den Bearbeitungswerkzeugen 5, 5' zurückgelegten Verstellwege an den jeweils zu bearbeitenden Rahmen R angepasst sind. Dabei können beide Gestelle 10, 10' bzw. die zugehörigen Bearbeitungseinheiten gleichzeitig (und unabhängig voneinander) arbeiten, so dass hiermit eine erhebliche Zeitersparnis verbunden ist. Insbesondere wird so vorgegangen, dass beispielsweise ein Bearbeitungswerkzeug 5' eine äußere Sichtfläche des Rahmens R bzw. eines zugehörigen Profils bearbeitet, während das zugehörige untere Bearbeitungswerkzeug 5 zur Bearbeitung der inneren Sichtfläche des Rahmens R eingesetzt wird. In gleicher Weise erfolgt gleichzeitig eine gesamte Innenbearbeitung am Profil, nämlich im Bereich innerer und äußerer Sichtflächen. Dies alles gelingt, weil die Bearbeitungswerkzeuge 5, 5' unabhängig voneinander jeweils in sämtlichen drei Raumrichtungen X, Y und Z bewegt werden können.

Schließlich ist noch eine Abtasteinrichtung 19 vorgesehen, bei welcher es sich im Rahmen des Ausführungsbeispiels um einen Profil-Wegabtaster 19 handelt (vgl. Fig. 2 und 4). Mit Hilfe dieser Abtasteinrichtung 19, die ebenfalls an die Steuereinheit 9 angeschlossen ist, kann der jeweils zu bearbeitende Rahmen R identifiziert werden. Hierdurch lässt sich eine Auswahl der erforderlichen Bearbeitungswerkzeuge 5 treffen, die in einer in der Steuereinheit 9 abgelegten Reihenfolge zum Einsatz kommen.

Dabei wird üblicherweise zunächst die Schweißraupe 2 mit Hilfe des Abstech- oder Abziehmessers 5, 5' in der in Fig. 5 im Detail dargestellten Art und Weise entfernt . Man erkennt, dass auch kompliziert gestaltete Querschnittsprofile der Profilstücke 1 bearbeitet werden können. So weist das Profilstück 1 gemäß Fig. 5 einen Vertikalabschnitt und einen Horizontalabschnitt auf, welche durch eine Schräge miteinander verbunden sind.

Das Abstech-/Abziehmesser 5, 5' weist zwei Schneiden 5a, 5b auf, und ist insgesamt als Schneidmeißel mit Schneide 5a und unterseitig angeschlossenem Schneidpflug mit Schneide 5b ausgeführt. Der Schneidmeißel mit der Schneide 5a dient in der Regel dazu, vertikal verlaufende Schweißraupen 2 abzutragen. Dagegen erfolgt mit dem Schweißpflug und der Schneide 5b eine Bearbeitung der Schräge sowie der Horizontalen. Selbstverständlich können auch Querschnitte bearbeitet werden, deren Vertikal- und/oder Horizontalflächen sowie die sie verbindende Schräge nicht in einer Ebene liegen, sondern als gleichsam Raumprofil ausgeführt sind. Dies gelingt dadurch, dass das Gestell 10 (und natürlich auch das Gestell 10' jeweils) in sämtlichen drei Raumrichtungen X, Y und Z verfahrbar ist (sind).

Ebenso lassen sich auch sogenannte Kämpfer bearbeiten, wie dies beispielhaft in der DE-PS 42 37 939 dargestellt ist. Hier ist von besonderem Vorteil, dass der Rahmen R zunächst einmal fest eingespannt bleiben und im Übrigen die praktisch V-förmig gestaltete Schweißraupe von ein und demselben Bearbeitungswerkzeug 5 abgetragen werden kann. Denn dieses sorgt zunächst für ein Entfernen eines V-Schenkels, während der andere V-Schenkel einfach durch Drehen des Gestells 10 bzw. 10' um 90° verputzt wird.

Jedenfalls wird unmittelbar deutlich, dass selbst komplizierteste Raumprofile von Schweißraupen 2 im Rahmen der Erfindung beherrscht werden. Das gelingt - wenn gewünscht - unter Rückgriff auf ein und dasselbe Bearbeitungswerkzeug 5, 5', so dass Diskontinuitäten einer regelmäßig hergestellten Schattenfuge schon vom Ansatz her vermieden werden. Immer wird ein optisch einwandfreies Ergebnis erreicht, und zwar mit bisher nicht für möglich gehaltenen Bearbeitungsgeschwindigkeiten.

Im Anschluss an das Einbringen einer Schattennut bzw. Schattenfuge mit Hilfe des Bearbeitungswerkzeuges bzw. Abstech-/Abziehmessers 5, 5' kann dann natürlich noch beispielsweise ein Bohrer zum Einsatz kommen, welcher eine Nut für eine Dichtung in gewohnter Weise freimacht. Auch ein Fräser kann Verwendung finden.

Insgesamt wird eine Verputzvorrichtung zur Verfügung gestellt, welche beliebige Konturen von Schweißraupen 2 (oder anderen Bearbeitungsspuren an Profilstücken 1) beherrscht. Dabei lassen sich ganz unterschiedliche Bearbeitungsergebnisse erzielen, je nachdem welches Bearbeitungswerkzeug 5, 5' zum Einsatz kommt bzw. kommen soll. Die Auswahl erfolgt zumeist nach Identifizierung eines zugehörigen Rahmens R mit Hilfe der Abtasteinrichtung 19. Damit ist ein vollautomatischer und verzögerungsfreier Betrieb - selbst bei wechselnden Formen des Rahmens R - gewährleistet.

## Patentansprüche

1. Verputzvorrichtung, insbesondere Schweißraupenputzmaschine, zum Bearbeiten von vorzugsweise Eckverbindungen an aus Profilstücken (1) zusammengesetzten, insbesondere zusammengeschweißten, Rahmen (R), mit
- mehreren Bearbeitungswerkzeugen (5, 5'), die in einem oder zwei Magazin-Werkzeugträger(n) (6, 6') aufgenommen werden, wobei der jeweilige Magazin-Werkzeugträger (6, 6') wenigstens eine Stelleinrichtung (8, 8') zur wahlweisen Überführung des Bearbeitungswerkzeuges (5, 5') von einer Ausgangsstellung (A, A₁, A₂) in eine Bearbeitungsposition (B, B₁, B₂) und zurück aufweist, ferner mit
- wenigstens einem Gestell (10, 10') zur Aufnahme des jeweiligen Bearbeitungswerkzeuges (5, 5') inklusive Magazin-Werkzeugträger (6, 6') sowie zugehöriger Stelleinrichtung (8, 8'), und mit
- einem Halter (17, 17') zur Aufnahme des Werkzeugträgers (6, 6') in dem Gestell (10, 10'), wobei der Halter (17, 17') in zumindest drei Richtungen (X, Y, Z) verfahrbar ist, so dass eine Sechsachsen- oder Mehrachsen-Verstellung der Bearbeitungswerkzeuge (5, 5') erfolgt,
**dadurch gekennzeichnet, dass**
- der jeweilige Magazin-Werkzeugträger (6, 6') jeweils in einer Ebene (E) angeordnete Aufnahmen (7, 7') für je ein eigenes Bearbeitungswerkzeug (5, 5') aufweist, wobei
- jede Aufnahme (7, 7') mit einer separat ansteuerbaren und als linear verstellbare Zylinder-/Kolbeneinheit (8, 8') ausgebildeten Stelleinrichtung (8, 8') ausgerüstet ist und
- zumindest der Magazin-Werkzeugträger (6, 6'), der Halter (17, 17') und die Stelleinrichtung (8, 8') mittels einer Steuereinheit (9) angesteuert werden, so dass
- jeder beliebige Raumpunkt unter Rückgriff auf ein vorbestimmtes und von der Steuereinheit (9) ausgewähltes Bearbeitungswerkzeug (5, 5') erreicht werden kann.

2. Verputzvorrichtung nach Anspruch 1, **dadurch gekennzeichnet, dass** die Steuereinheit (9) als SPS-Einheit (9) ausgebildet ist.

3. Verputzvorrichtung nach Anspruch 1 oder 2, **dadurch gekennzeichnet, dass** zwei in Bezug zu einem Bearbeitungstisch (3) gegenüberliegende Magazin-Werkzeugträger (6, 6') zur oberseitigen und/oder unterseitigen Bearbeitung des Rahmens (R) vorgesehen sind.

4. Verputzvorrichtung nach einem der Ansprüche 1 bis 3, **dadurch gekennzeichnet, dass** das Gestell (10, 10') einen in X- und Y-Richtung verfahrbaren Kreuztisch (11, 11') sowie einen hierauf stehenden Achsenbock (12, 12') zur Verstellung des Magazin-Werkzeugträgers (6, 6') in Z-Richtung aufweist.

5. Verputzvorrichtung nach Anspruch 4, **dadurch gekennzeichnet, dass** der Achsenbock (12, 12') eine Verstelleinrichtung (16, 16') mit dem angeschlossenen Halter (17, 17') aufweist.

6. Verputzvorrichtung nach einem der Ansprüche 1 bis 5, **dadurch gekennzeichnet, dass** eine Abtasteinrichtung (19) zur Identifizierung eines zu bearbeitenden Rahmens (R) verwirklicht ist.

## Claims

1. A finishing device, especially a weld-bead finishing machine for processing preferably corner connections of frames (R) composed of, especially welded together from, profile pieces (1), comprising
- a plurality of processing tools (5, 5') accommodated in one or two magazine tool carrier(s) (6, 6') wherein the respective magazine tool carrier (6, 6') has at least one adjusting device (8, 8') for selective transfer of the processing tool (5, 5') from a starting position (A, A₁, A₂) into a processing position (B, B₁, B₂) and back, furthermore comprising
- at least one frame (10, 10') for receiving the respective processing tool (5, 5') including magazine tool carrier (6, 6') as well as relevant adjusting device (8, 8') and comprising
- a holder (17, 17') for receiving the tool carrier (6, 6') in the frame (10, 10') wherein the holder (17, 17') can be displaced in at least three directions (X, Y, Z) so that a six-axis or multi-axis adjustment of the processing tool (5, 5') takes place,
**characterised in that**
- the respective magazine tool carrier (6, 6') has receptacles (7, 7') arranged in respectively one plane (E) each for its own processing tool (5, 5') wherein
- each receptacle (7, 7') is equipped with a separately controllable adjusting device (8, 8') constructed as a linearly adjustable cylinder/piston unit (8, 8'), and
- at least the magazine tool carrier (6, 6'), the holder (17, 17') and the adjusting device (8, 8') are controlled by means of a control unit (9) so that
- any arbitrary spatial point can be reached by recourse to a predetermined processing tool (5, 5') selected by the control unit (9).

2. The finishing device according to claim 1, **characterised in that** the control unit (9) is constructed as an SPC unit (9).

3. The finishing device according to claim 1 or claim 2, **characterised in that** two opposing magazine tool carriers (6, 6') in relation to a processing table (3) are provided for upper-side and/or lower-side processing of the frame (R).

4. The finishing device according to any one of claims 1 to 3, **characterised in that** the frame (10, 10') has a cross-table (11, 11') displaceable in the X and Y direction and an axle bracket (12, 12') positioned hereon for adjusting the magazine tool carrier (6, 6') in the Z direction.

5. The finishing device according to claim 4, **characterised in that** the axle bracket (12, 12') has an adjusting device (16, 16') with the connected holder (17, 17').

6. The finishing device according to any one of claims 1 to 5, **characterised in that** a scanning device (19) is implemented to identify a frame (R) to be processed.

## Revendications

1. Dispositif de crépissage, notamment une ébarbeuse de cordons de soudure, pour le façonnement de préférence de jonctions transversales sur des cadres (R) composés de pièces de profil (1) assemblées, notamment soudées les unes aux autres, comportant
- plusieurs outils de façonnement (5, 5'), qui sont logés dans une ou deux plaques(s) de support d'outils d'entrepôt (6, 6'), dans lesquels la plaque de support d'outils d'entrepôt respective (6, 6') présente au moins un dispositif de commande(8, 8') pour transporter au choix l'outil de façonnement (5, 5' ) d'une position de départ (A, A1, A2) à une position de façonnement (B, B1, B2) puis inversement, comportant en outre
- au moins un bâti (10, 10') qui reçoit l'outil de façonnement respectif (5, 5') incluant la plaque de support d'outils d'entrepôt (6, 6') ainsi que le dispositif de commande (8, 8') correspondant , et comportant également
- un support (17, 17') qui reçoit la plaque de support d'outils (6, 6') dans le bâti (10, 10'), dans lequel le support (17, 17') est déplaçable dans au moins trois directions (X, Y, Z), de telle sorte qu'un réglage des outils de façonnement (5, 5') sur six axes ou plusieurs axes soit réalisé,
**caractérisé en ce que**
- la plaque de support d'outils d'entrepôt (6, 6') respective présente respectivement des guides avant (7, 7') disposés à un niveau (E) pour chacun des outils de façonnement (5, 5'), dans laquelle
- chaque guide avant (7, 7') est équipé d'un dispositif de commande (8, 8') actionnable séparément réalisé à partir d'une unité de piston/cylindre (8, 8') réglable de manière linéaire et
- au moins la plaque de support d'outils d'entrepôt (6, 6'), le support (17, 17') et le dispositif de commande (8, 8') sont actionnés au moyen d'une unité de commande (9), de telle sorte que
- n'importe quel point de l'espace puisse être atteint par un outil de façonnement (5, 5') prédéterminé et choisi par l'unité de commande (9).

2. Dispositif de crépissage selon la revendication 1, **caractérisé en ce que** l'unité de commande (9) est conçue comme une unité CPE (9).

3. Dispositif de crépissage selon la revendication 1 ou 2, **caractérisé en ce que** deux plaques de support d'outils d'entrepôt (6, 6') opposées relativement à une table de travail (3) sont prévues pour le façonnement supérieur et/ou inférieur du cadre (R).

4. Dispositif de crépissage selon une des revendications 1 à 3, **caractérisé en ce que** le bâti (10, 10') présente une table à mouvements croisés (11, 11') déplaçable dans une direction X et Y ainsi qu'un chevalet d'arbres (12, 12') s'élevant sur cette dernière afin de régler la plaque de support d'outils d'entrepôt (6, 6') dans la direction Z.

5. Dispositif de crépissage selon la revendication 4, **caractérisé en ce que** le chevalet d'arbres (12, 12') présente un dispositif de commande (16, 16') incluant le support (17, 17').

6. Dispositif de crépissage selon une quelconque des revendications 1 à 5, **caractérisé en ce qu'**un scanneur (19) est réalisé afin d'identifier un cadre (R) qui doit être façonné.
